# EUROPÄISCHE PATENTSCHRIFT

(11) **EP 2 519 798 B1**
(45) Veröffentlichungstag und Bekanntmachung des Hinweises auf die Patenterteilung: **15.01.2020**
(21) Anmeldenummer: 10807589.6
(22) Anmeldetag: 23.12.2010
(51) Int. Cl.: F28D 20/00, F28F 1/20, F28F 9/013, E04B 2/18, F24D 3/14

(54) **VORRICHTUNG UND ANLAGE ZUM ZWISCHENSPEICHERN THERMISCHER ENERGIE**
DEVICE AND SYSTEM FOR THE INTERMEDIATE STORAGE OF THERMAL ENERGY
DISPOSITIF ET INSTALLATION D'ACCUMULATION INTERMÉDIAIRE D'ÉNERGIE THERMIQUE

(30) Priorität: 31.12.2009 DE 102009060911
(43) Veröffentlichungstag der Anmeldung: 07.11.2012
(73) Patentinhaber: Ed. Züblin AG, 70567 Stuttgart (DE); Deutsches Zentrum für Luft- und Raumfahrt e.V., 51147 Köln (DE)
(72) Erfinder: BAHL, Carsten, 12205 Berlin (DE); BROSIG, Stefan, 70563 Stuttgart (DE); ENOEKL, Viktor, 71144 Steinenbronn (DE); LAING, Dörte, 70563 Stuttgart (DE); FISS, Michael, 73240 Wendlingen (DE)
(74) Vertreter: Patentanwälte Dr. Keller, Schwertfeger Partnerschaft mbB
(86) Internationale Anmeldenummer: PCT/EP2010/007909
(87) Internationale Veröffentlichungsnummer: WO 2011/079936

(56) Entgegenhaltungen:
- WO-A1-02/25203
- DE-A1- 10 211 598
- FR-A1- 2 928 671
- JP-A- 58 075 693
- KR-B1- 100 915 499

## Beschreibung

### Technisches Gebiet:

Die Erfindung betrifft eine Vorrichtung zum Zwischenspeichern thermischer Energie gemäß dem Oberbegriff des unabhängigen Patentanspruchs 1.

### Stand der Technik:

Angesichts weltweit schwindender Primärrohstoffe als Ressourcen zur Energieerzeugung gewinnen regenerative und alternative Konzepte immer mehr an Bedeutung. Beispielhaft sei die Nutzung von Sonnenenergie in solarthermischen Kraftwerken oder die Nutzung von Abwärme industrieller Fertigungsprozesse genannt. Da diese alternativen Energieformen jedoch an die Einstrahlung der Sonne oder an bestimmte industrielle Prozesse gekoppelt sind, ist deren jederzeitige Verfügbarkeit nicht gewährleistet. Deren praktische Verwendbarkeit hängt somit in starkem Maße von der Möglichkeit ab, die zu einem bestimmten Zeitpunkt anfallende Energie zwischenspeichern und zu einem späteren Zeitpunkt bereitstellen zu können. Der Speicherung thermischer Energie kommt somit eine zentrale Bedeutung bei der Entwicklung und Umsetzung alternativer Konzepte zur Energiegewinnung zu.

Bekannte Anlagen zur Speicherung thermischer Energie umfassen im Wesentlichen eine Wärmequelle, beispielsweise einen Sonnenkollektor oder eine Verbrennungskraftmaschine, einen Wärmespeicher mit einem thermisch be- und entladbaren Speichermedium und zumindest einen Wärmekreislauf zum Be- und Entladen des Wärmespeichers, bei dem ein Arbeitsmedium von der Wärmequelle zum bzw. vom Wärmespeicher zum Wärmebedarfsort strömt.

Für die Wirksamkeit des ganzen Systems ist das Speichermedium von zentraler Bedeutung. Dieses muss im Wesentlichen zwei Anforderungen genügen, nämlich einerseits eine hohe thermische Speicherkapazität aufweisen, d.h. eine möglichst große Fähigkeit besitzen, thermische Energie pro Gewichts- und Volumeneinheit aufzunehmen, und andererseits sich durch eine hohe Wärmeleitfähigkeit auszeichnen, d.h. die Wärme muss sich möglichst schnell im Speichermedium verteilen können.

Als Speichermedium sind bereits Flüssigkeiten bekannt, die die beiden oben genannten Kriterien erfüllen. Für den Niedertemperaturbereich bis etwa 100° C eignet sich Wasser als Speichermedium, da es kostengünstig zur Verfügung steht und sich durch seine hohe thermische Speicherkapazität auszeichnet. Als Nachteil erweist sich jedoch das rasche Ansteigen des Dampfdrucks bei Temperaturen über 100° C, wodurch aufwändige Druckbehälter notwendig werden. Aus diesem Grund werden für höhere Temperaturbereiche Flüssigkeiten mit höherem Siedepunkt verwendet, z.B. Wärmeträgeröle oder Salzschmelzen, womit jedoch eine deutliche Erhöhung der Investitionskosten verbunden ist. Durch die Zirkulation flüssiger Speichermedien ergibt sich eine konvektive Wärmeübertragung, mit dem Vorteil einer schnellen und gleichmäßigen Be- und Entladung des Speichermediums.

Neben Flüssigspeichern sind auch schon Feststoffspeicher bekannt, die beispielsweise aus Metallen wie Stahl oder Guss bestehen. Solche Metalle eignen sich aufgrund ihres hohen spezifischen Gewichts und ihrer hohen Wärmeleitfähigkeit gut als Speichermedium, verursachen jedoch hohe Investitionskosten.

Aus der DE 10 2008 026 017 A1 ist auch schon ein Feststoffspeicher aus mineralischem Material bekannt, der von einer Vielzahl achsparalleler Rohre durchzogen ist, in denen ein Energieträgermedium im Wärmekreislauf strömt. Die thermische Energie des Energieträgermediums wird über die Rohre in das Speichermedium eingetragen, und verteilt sich dort allmählich und gleichmäßig über das gesamte Volumen. Der gegenseitige Abstand der einzelnen Rohre und damit deren Anzahl ist durch die Wärmeleitfähigkeit des Speichermaterials vorgegeben, denn es muss für die praktische Nutzbarkeit des Wärmespeichers gewährleistet sein, dass sich die thermische Energie möglichst schnell und gleichmäßig im ganzen Speicher verteilt, um eine rasche Be- und Entladung des Energiespeichers zu ermöglichen.

Feststoffspeicher aus einem mineralischen Material haben zwar den großen Vorteil, kostengünstig hergestellt werden zu können, man nimmt jedoch bei deren Einsatz gleichzeitig in Kauf, dass sie nur eine beschränkte Wärmeleitfähigkeit besitzen. Um dennoch eine zufriedenstellende Wärmeleitung zu erreichen, werden die Rohre in einer verhältnismäßig hohen Dichte im Feststoffspeicher angeordnet, wodurch sich deren Anzahl und damit wiederum die Herstellkosten erhöhen. Ein durch die Verwendung eines mineralischen Feststoffspeichers erzielter Kostenvorteil wird damit teilweise wieder aufgehoben.

Die WO 02/25203 A1 beschreibt eine Wärmespeichervorrichtung bestehend aus einem Feststoffspeicher und mit einem von Einzelrohren gebildeten Rohrleitungssystem, das den Feststoffspeicher durchzieht und das von einem Energieträgermedium durchströmt ist. Ferner sind Wärmeleitelemente vorgesehen, die eine höhere Wärmeleitfähigkeit besitzen als der Feststoffspeicher. Des Weiteren wird ein blockweiser Aufbau in Form von Fertigteilelementen gezeigt.

Die DE 102 11 598 A1 beschreibt ein Heiz-/Kühlsystem mit wenigstens einem aufheizbaren bzw. abkühlbaren Speicherkörper aus einem Natursteinmaterial mit hoher Wärmespeicherkapazität. Durch das Innere des Speicherkörpers verläuft wenigstens ein Kanal, durch welchen ein Wärmeübertragungsmedium strömt. Dadurch ist ein effektiver und flexibel einsetzbarer Wärmeaustausch möglich.

Die KR 100 915 499 B1 beschreibt ein Verfahren zur Herstellung eines Speicherkörpers, der aus mehreren unterschiedlichen Schichten aufgebaut ist. Eine Grundschicht besteht aus einem wasserdichten Material und einer oberen Kunststoffschicht. Die Wärmeleitelemente liegen auf der Kunststoffschicht, während die Einzelrohre zwischen den Wärmeleitelementen angeordnet sind. Das Dokument zeigt die Merkmale des Oberbegriffs von Anspruch 1.

In der JP 58 075693 A wird eine Vorrichtung zur Energiespeicherung beschrieben, bei der ein Speicherkörper aus Kunststoffmaterial und Metall vorgesehen ist. Dabei durchziehen Einzelrohre den Speicherkörper in mehreren Schichten, sowohl in horizontaler als auch in vertikaler Richtung.

In der FR 2 928 671 A wird eine Energiespeichervorrichtung beschrieben, die aus mehreren Fertigteilelementen in Form von Blöcken besteht, wobei die Blöcke ein von Kanälen gebildetes Flüssigkeitsleitungssystem aufweisen. Beim Zusammenbau der Blöcke wird das Kanalnetz mit einem flüssigen Medium gefüllt.

### Darstellung der Erfindung:

Vor diesem Hintergrund liegt der Erfindung die Aufgabe zugrunde, bekannte Feststoffspeicher im Hinblick auf ihre Wirtschaftlichkeit und Funktion zu verbessern.

Gelöst wird diese Aufgabe durch eine Vorrichtung mit den Merkmalen des unabhängigen Patentanspruchs 1.

Vorteilhafte Weiterbildungen ergeben sich aus den Unteransprüchen.

Ausgangspunkt für die Erfindung bilden Wärmespeicher, bei denen ein Be- und Entladen des Feststoffspeichers über ein in dem Rohrleitungssystem strömendes Energieträgermedium erfolgt, wobei das Temperaturgefälle zwischen Energieträgermedium und Feststoffspeicher die treibende Kraft für den Wärmestrom ist. Maßgeblichen Einfluss auf die Be- bzw. Entladeleistung des Feststoffspeichers hat zudem die Wärmeleitfähigkeit der verwendeten Speichermaterialien. Beispielsweise hat Stahl im Vergleich zu Beton eine um den Faktor von circa 40 höhere Wärmeleitfähigkeit, mit der Folge dass sich die im Rohrleitungssystem bereit gestellte thermische Energie nur langsam im Feststoffspeicher verbreitet. Bei einem Feststoffspeicher aus Beton führt dies dazu, dass die unmittelbar die Einzelrohre umgebenden Bereiche des Feststoffspeichers sehr schnell thermisch aufgeladen sind, mit zunehmendem Abstand von den Einzelrohren jedoch ein großer Temperaturabfall zu beobachten ist und daher eine vergleichsweise große Zeitspanne benötigt wird, bis ein weitestgehend ausgeglichener Energiezustand über das ganze Volumen des Feststoffspeichers erreicht ist. Zur Verkürzung der Be- und Entladezeiten des Feststoffspeichers müsste konsequenterweise der radiale Abstand der Einzelrohre untereinander verringert werden, was jedoch infolge der damit verbundenen höheren Anzahl an Einzelrohren die Wirtschaftlichkeit eines solchen Wärmespeichers beeinträchtigen würde.

Teilweise wird diese Problematik mit Hilfe von Wärmeleitelementen gelöst, die eine im Vergleich zum Material des Feststoffspeichers höhere Wärmeleitfähigkeit besitzen und sich ausgehend von den Einzelrohren in den Feststoffspeicher erstrecken. Bevorzugte Materialien für die Wärmeleitelemente sind Metalle wie zum Beispiel Stahl, Aluminium, Kupfer oder Graphit, das sowohl als gemahlenes oder verpresstes Naturgraphit sowie expandiertes oder verpresstes Naturgraphit (Graphitfolie) vorliegen kann. Die Wärmeleitelemente bilden auf diese Weise Strömungsbahnen zum schnellen Transport thermischer Energie über größere Strecken innerhalb des Feststoffkörpers, von denen aus dann eine gleichmäßige Beschickung des Speichervolumens über nur noch verhältnismäßig kurze Strecken erfolgt. Auf diese Weise ist ein schnelles und gleichmäßiges Be- und Entladen des Feststoffspeichers bei bestmöglicher Nutzung des Speichervolumens möglich. Die Erfindung zeichnet sich somit durch eine hohe spezifische Wärmeleistung des Feststoffspeichers auch bei vergleichsweise großen radialen Abständen der Einzelrohre des Rohrleitungssystems aus und vereint so die scheinbar widersprüchlichen Forderungen nach einer hohen Wärmeleitfähigkeit einerseits und eines kostengünstigen Speichermaterials andererseits.

### Beschreibung der Zeichnungen:

Die Erfindung wird nachstehend näher erläutert.

Es zeigen
- Fig. 1: eine Schrägansicht auf einen gattungsgemäßen nicht beanspruchten Wärmespeicher,
- Fig. 2: einen Längsschnitt durch den in Fig. 1 dargestellten Wärmespeicher,
- Fig. 3: einen Querschnitt durch den in Fig. 2 dargestellten Wärmespeicher entlang der Linie III - III,
- Fig. 4: eine Schrägansicht einer ersten nicht beanspruchten Ausführungsform eines Wärmespeichers ohne Darstellung des Feststoffspeichers,
- Fig. 5: eine Schrägansicht einer zweiten Ausführungsform eines erfindungsgemäßen Wärmespeichers,
- Fig. 6: eine Schrägansicht einer dritten Ausführungsform eines erfindungsgemäßen Wärmespeichers,
- Fig. 7a und b: Details zu der in Figur 5 dargestellten Ausführungsform,
- Fig. 8: eine Explosionsdarstellung einer vierten Ausführungsform einer nicht beanspruchten Vorrichtung,
- Fig. 9: ein Detail einer fünften Ausführungsform eines nicht beanspruchten Wärmespeichers im Wärmeübergangsbereich,
- Fig. 10: eine Schrägansicht einer sechsten Ausführungsform eines nicht beanspruchten Wärmespeichers,
- Fig. 11: eine Schrägansicht einer siebten Ausführungsform eines nicht beanspruchten Wärmespeichers,
- Fig. 12a: eine Schrägansicht einer achten Ausführungsform eines nicht beanspruchten Wärmespeichers,
- Fig. 12b: ein Detail des in Figur 12a dargestellten Wärmespeichers,
- Fig. 13a: eine Schrägansicht einer neunten Ausführungsform eines nicht beanspruchten Wärmespeichers,
- Fig. 13b: ein Detail des in Figur 13a dargestellten Wärmespeichers,
- Fig. 14: eine Schrägansicht auf einen nicht beanspruchten Wärmespeicher mit horizontaler Verspannung, und die
- Fig. 15a und b: Querschnitte durch einen Wärmespeicher unter Darstellung der Wärmeverteilung beim Beladen des Wärmespeichers.

### Wege zur Ausführung der Erfindung und gewerbliche Verwertbarkeit:

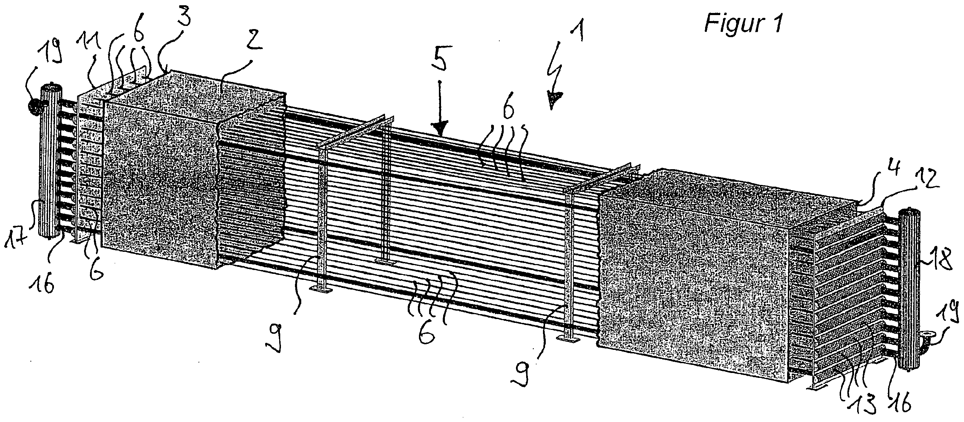

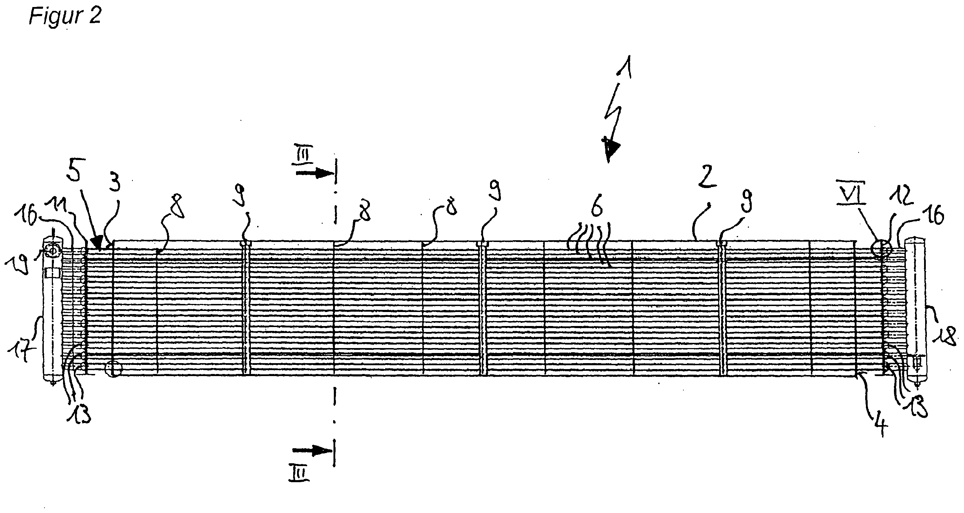

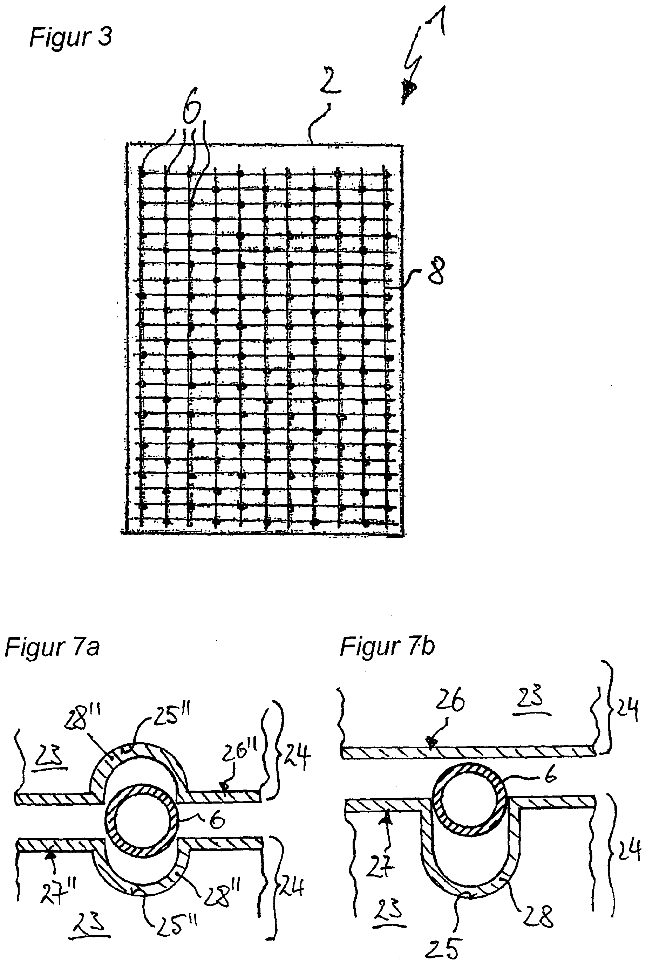

Fig. 1 zeigt einen gattungsgemäßen Wärmespeicher 1 in einer Schrägansicht, die Figuren 2 und 3 in den dazugehörigen Schnitten. Als wesentliches Element des Wärmespeichers 1 sieht man einen quaderförmigen Feststoffspeicher 2 mit ausgeprägter Längserstreckungsrichtung, dessen Längsenden von den Stirnflächen 3 und 4 gebildet sind. Der Feststoffspeicher 2 ist im vorliegenden Beispiel aus Beton hergestellt, was sowohl in Ortbetonbauweise als auch, wie später noch näher erläutert, mit Betonfertigteilen geschehen kann. Andere Materialien wie zum Beispiel Keramik, Ziegel oder Schamotte liegen ebenfalls im Rahmen der Erfindung. Auch schüttfähiges mineralisches Gut kann als Feststoffspeicher dienen, das dann als Schüttung innerhalb eines Gehäuses vorliegt. Die Abmessungen des Wärmespeichers 1 sind nicht festgelegt und werden in Abhängigkeit des jeweiligen Anwendungszwecks bestimmt. Eine bevorzugte Ausführungsform eines Wärmespeichers 1 besitzt eine Länge von etwa 18 m, eine Höhe von etwa 4 m und eine Breite von etwa 2,5 m bis 3 m.

Ein weiteres gattungsgemäßes Element stellt das mit 5 gekennzeichnete Rohrleitungssystem dar, das sich aus einer Vielzahl von Einzelrohren 6 zusammensetzt. Die Einzelrohre 6 durchziehen den Feststoffspeicher 2 in seiner Längserstreckungsrichtung in achsparalleler Lage, was in Fig. 1 durch Weglassen des Feststoffspeichers 2 über einen mittleren Längsabschnitt deutlich gemacht ist. Die Einzelrohre 6 reichen dabei unter Bildung eines Überstandes über die Stirnflächen 3 und 4 hinaus.

Wie vor allem aus Fig. 3 ersichtlich, sind die Einzelrohre 6 in einer Vielzahl horizontaler, planparallel übereinander liegender Ebenen vorzugsweise äquidistant angeordnet, wobei die Einzelrohre 6 zweier benachbarter Ebenen einen seitlichen Versatz um den halben horizontalen Abstand zweier Einzelrohre 6 aufweisen können. Auf diese Weise ergibt sich eine gleichmäßige Verteilung der Einzelrohre 6 über den Querschnitt des Feststoffspeichers 2, die eine gleichmäßige Einleitung der thermischen Energie in den Feststoffspeicher 2 zur Folge hat. Bei Feststoffspeichern aus Ortbeton können zur Einhaltung des oben beschriebenen Rasters über die gesamte Länge der Einzelrohre 6 innerhalb des Feststoffspeichers 2 in vorgegebenen Längsabständen in jeweils einer Querschnittsebene Abstandhalter zum Beispiel aus Stahlmatten 8 angeordnet sein, deren Quer- und Längsstäbe dem vorgegebenen Raster entsprechen und die zur Befestigung der Einzelrohre 6 dienen. In größeren Längsabständen ist die Verstärkung einzelner Stahlmatten 8 durch Profilrahmen 9 möglich (Fig. 1 und 2).

Die Einzelrohre 6 enden, wie schon beschrieben, in Querschnittsebenen, die im lichten Abstand zu den Stirnflächen 3 und 4 verlaufen, beispielsweise im Abstand von 40 cm. In diesen Querschnittsebenen, also planparallel zu den Stirnflächen 3 und 4, sind Stirnplatten 11 und 12 angeordnet, die mit Durchgangsöffnungen entsprechend dem Raster der Einzelrohre 6 versehen sind. Die Einzelrohre 6 münden an der Rückseite der Stirnplatten 11 und 12 in Sammelkanäle, die wiederum über Zwischenrohrstücke 16 an einen Verteiler 17 bzw. Sammler 18 angeschlossen sind, die jeweils einen Anschlussstutzen 19 für den Zu- bzw. Ablauf des Wärmespeichers 1 besitzen (Fig. 2).

Das Rohrleitungssystem 5 wird von einem fluidförmigen Energieträgermedium durchströmt, beispielsweise von einem Thermoöl, das im Kreislauf geführt ist und die thermische Energie zum Beladen des Wärmespeichers 1 von einer Wärmequelle, beispielsweise einem Sonnenkollektor, zum Wärmespeicher 1 transportiert oder zum Entladen des Speichers 1 die im Speicher 1 vorhandene thermische Energie zu einem Verbraucher. Die dem Energieträgermedium innewohnende thermische Energie wird somit zunächst auf das Rohrleitungssystem 5 übertragen, von wo sie in den Feststoffspeicher 2 eingeleitet wird.

Um Schäden infolge temperaturbedingter unterschiedlicher Längenausdehnungen zwischen Feststoffspeicher 2 und Rohrleitungssystem 5 zu vermeiden, ist eine mechanische Entkoppelung dieser beiden Komponenten vorgesehen, was beispielsweise durch Vorsehen eines lichten oder mit einem thermisch leitfähigen Material gefüllten Spalts zwischen Feststoffspeicher 2 und Rohrleitungssystem 5 geschehen kann.

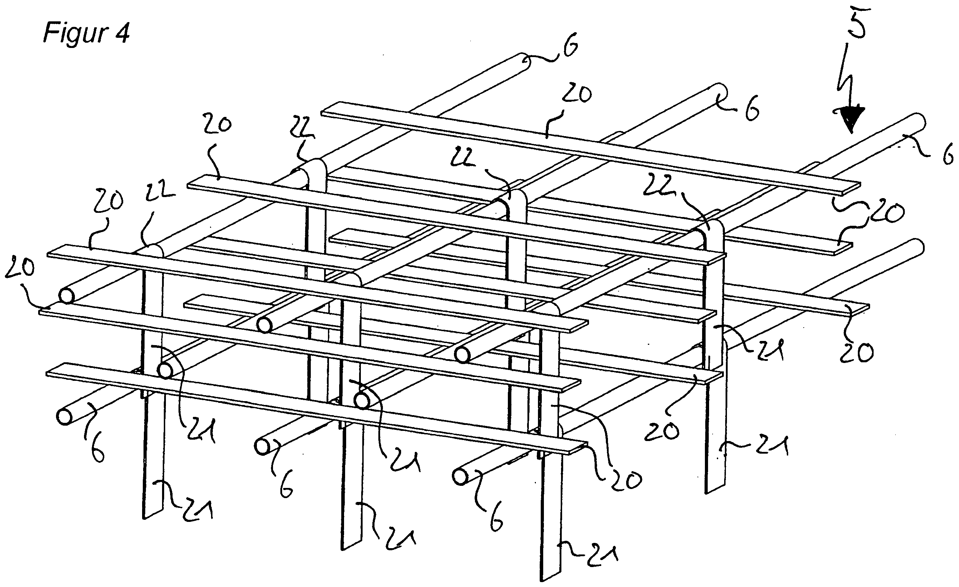

Die Figuren 4 bis 11 zeigen verschiedene, teilweise nicht beanspruchte Ausführungsformen der Erfindung, die eine hohe spezifische Wärmeleistung des Feststoffspeichers 2 bei gleichzeitig großen radialen Abständen der Einzelrohre 6 des Rohrleitungssystems 5 ermöglichen. Zur Verdeutlichung der Konstruktions- und Funktionsweise eines Wärmespeichers 1 sind dort lediglich kleine Teilausschnitte des Feststoffspeichers 2 mit seinen wesentlichen Merkmalen in größerem Maßstab dargestellt. Die Figuren 4 bis 11 sind daher in Ergänzung mit den Figuren 1 bis 3 zu sehen.

Fig. 4 zeigt eine erste Ausführungsform nicht beanspruchter Wärmeleitelemente in einer Schrägansicht auf einen Teilausschnitt des Rohrleitungssystems 5, wobei zur deutlicheren Darstellung der Feststoffspeicher 2 selbst nicht dargestellt ist. Man sieht die in horizontal gestaffelten Ebenen achsparallel zueinander verlaufenden Einzelrohre 6, die von einer Ebene zur anderen mit einem seitlichen Versatz in der Größe des halben gegenseitigen seitlichen Abstand angeordnet sind, so dass der Abstand zweier Einzelrohe 6 an jeder Stelle des Feststoffspeichers 2 einheitlich ist. Zudem sind die Einzelrohre 6 vom Feststoffspeicher 2 mechanisch entkoppelt, beispielsweise durch Ummantelung mit einer nicht dargestellten Graphitfolie.

Während in den Einzelrohren 6 durch das darin fließende Energieträgermedium vor allem eine Wärmeverteilung im Feststoffspeicher 2 in axialer Richtung erfolgt, sind zur Querverteilung der thermischen Energie horizontale Wärmeleitelemente 20 und vertikale Wärmeleitelemente 21 vorgesehen. Die Wärmeleitelemente 20, 21 bestehen im vorliegenden Ausführungsbeispiel aus metallenen Flachstäben.

Die horizontalen Wärmeleitelemente 20 sind mit ihrer Längsachse quer zu den Einzelrohren 6 einer Ebene auf diese gelegt und erstrecken sich aufgrund ihrer Länge über mehrere Einzelrohre 6 hinweg. Der axiale Abstand der horizontalen Wärmeleitelemente 20 liegt in einem Bereich von 5 cm bis 30 cm und beträgt im vorliegenden Beispiel 15 cm. Durch die kontaktbehaftete Auflage der horizontalen Wärmeleitelemente 20 auf den Einzelrohren 6 ergibt sich ein im Wesentlichen linienförmiger Wärmeübergangsbereich, über den die thermische Energie von den Einzelrohren 6 in die horizontalen Wärmeleitelemente 20 eingetragen wird.

In ihrer einfachsten Ausführungsform ruhen die Wärmeleitelemente 20 aufgrund ihres Eigengewichts ohne weitere Sicherungsmaßnahmen auf den Einzelrohren 6. Bevorzugt ist jedoch deren Fixierung an vorbestimmter Stelle beispielsweise durch Anschweißen oder Anbinden mit Bindedraht. Eine andere Art der Fixierung kann auch durch Einflechten der horizontalen Wärmeleitelemente 20 in die in einer Ebene liegenden Einzelrohre 6 erfolgen, wobei das Wärmeleitelement 20 von Einzelstab 6 zu Einzelstab 6 die Anlageseite wechselt, also einmal oberhalb und einmal unterhalb an den Einzelstäben 6 vorbei geführt ist. Aufgrund der elastischen Eigenschaften des Wärmeleitelements 20 führen die Rückstellkräfte dabei zu einem Anpressen der Wärmeleitelemente 20 an die Einzelrohre 6.

Zur Wärmeverteilung in vertikaler Richtung sieht die in Fig. 4 dargestellte Ausführungsform vertikale Wärmeleitelemente 21 vor, die im vorliegenden Beispiel ebenfalls aus metallenen Flachstäben bestehen und die aufgrund ihrer Länge mindestens den vertikalen Abstand zweiter übereinander liegender Einzelrohre 6 überbrücken. Die Fixierung der vertikalen Wärmeleitelemente 21 kann wie zuvor beschrieben erfolgen, nämlich durch Schweißen, Binden oder Einflechten. Das in Fig. 4 dargestellte Ausführungsbeispiel offenbart darüber hinaus eine weitere Möglichkeit, bei der das obere Ende der vertikalen Wärmeleitelemente 21 zur Bildung eines Hakens 22 U-förmig umgebogen und mit dem Haken 22 in die Einzelrohre 6 eingehängt ist, während das gegenüberliegende Ende an dem darunter liegenden Einzelrohr 6 anliegt. Da der Haken 22 dem Umfang der Einzelrohre 6 teilweise folgt, ergibt sich daraus eine Vergrößerung des Wärmeübergangsbereichs und damit ein verbesserter Wärmeübergang.

Ein derart vorbereitetes Rohrleitungssystem 5 kann zur Fertigstellung des Feststoffspeichers 2 beispielsweise in eine geschlossene Schalung gestellt und einbetoniert werden. Auf diese Weise entsteht ein Feststoffspeicher 2 aus Beton, der in Längsrichtung von den Einzelrohren 6 des Rohrleitungssystems 5 durchzogen ist und in horizontaler und vertikaler Querrichtung dazu von den horizontalen Wärmeleitelementen 20 und vertikalen Wärmeleitelementen 21. Ein derartiger Feststoffspeicher 2 kann trotz begrenzter Wärmeleitfähigkeit des Speichermaterials innerhalb kürzester Zeit gleichmäßig mit thermischer Energie be- bzw. entladen werden.

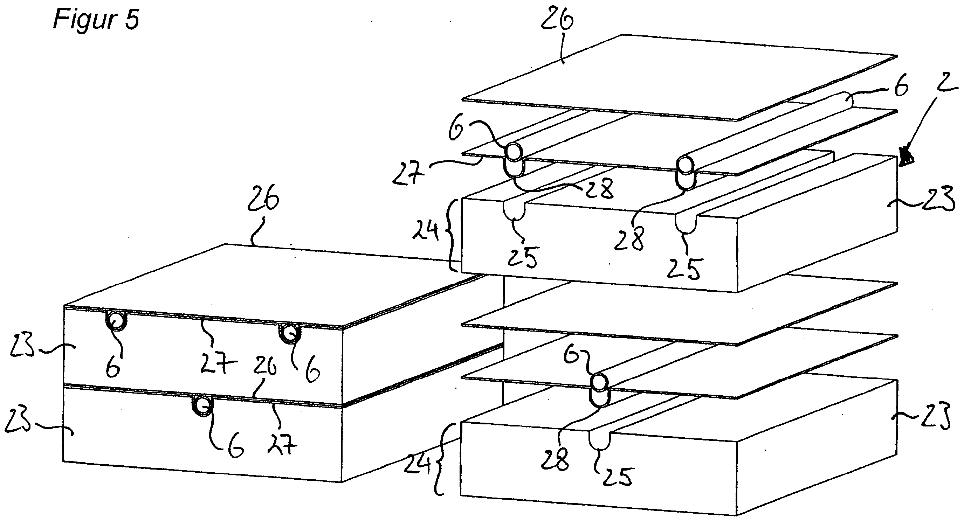

Fig. 5 zeigt einen Teilausschnitt einer zweiten Ausführungsform eines erfindungsgemäßen Wärmespeichers 1. Bei dieser Ausführungsform besteht der Feststoffspeicher 2 aus Fertigteilelementen 23, die in horizontalen Schichten 24 modulartig aufeinander gelegt sind, wobei die Einzelrohre 6 des Rohrleitungssystems 5 in den horizontalen Stoßfugen benachbarter Schichten 24 verlaufen.

Wie bereits erwähnt soll mit der in Fig. 5 gewählten Darstellungsart lediglich das Funktionsprinzip des Wärmespeichers 1 verdeutlicht werden, weswegen lediglich ein kleiner Teilausschnitt des Wärmespeichers 1 dargestellt ist. In der Realität erstrecken sich die Fertigteilelemente 23 je nach Größe des Feststoffspeichers 2 über die gesamte Breite und/oder Länge des Feststoffspeichers 2 oder aber bei Aneinanderreihung mehrerer Fertigteilelemente 23 auch nur über einen Teil davon. Die Dicke der Fertigteilelemente 23 entspricht dem vertikalen Abstand der Einzelrohre 6 des Rohrleitungssystems 5.

Zur Aufnahme der Einzelrohre 6 in der Stoßfuge sind in der Oberseite der Fertigteilelemente 23 nutförmige Ausnehmungen 25 eingeformt. Die nutförmigen Ausnehmungen 25 weisen einen ausgerundeten Grund auf und besitzen eine Tiefe und Breite, die etwas größer als der Durchmesser der Einzelrohre 6 ist, woraus sich ein U-förmiger Querschnitt der nutförmigen Ausnehmungen 25 ergibt.

Die nutförmigen Ausnehmungen 25 erstrecken sich über die gesamte Länge des Feststoffspeichers 2, so dass, wenn in Längsrichtung mehrere Fertigteilelemente 23 hintereinander gelegt sind, die nutförmigen Ausnehmungen 25 über die gesamte Länge fluchtend verlaufen. Der seitliche Abstand der nutförmigen Ausnehmungen 25 untereinander entspricht dem seitlichen Abstand der Einzelrohre 6, wobei in Abhängigkeit der Breite der Fertigteilelemente 23 ein Fertigteilelement 23 eine bis eine Vielzahl von nutförmigen Ausnehmungen 25 aufweisen kann.

Zusätzlich sieht man in der Stoßfuge zweier Fertigteilelemente 23 ein oberes horizontales Wärmeleitelement 26 und ein unteres horizontales Wärmeleitelement 27, welche jeweils eine dünnwandige flächenhafte Struktur besitzen und beispielsweise aus einem Metallblech oder einer Graphitfolie bestehen können. Die Wärmeleitelemente 26 und 27 erstrecken sich über die gesamte Breite und/oder Länge der Fertigteilelemente 23 oder auch nur über eine Teilbreite und/oder Teillänge, wobei in letzterem Fall Aneinanderreihungen mehrerer Wärmeleitelemente 26 und 27 möglich sind.

Während das obere Wärmeleitelement 26 über seine gesamte Fläche plan ausgebildet ist, weist das untere Wärmeleitelement 27 in den den nutförmigen Ausnehmungen 25 zugeordneten Bereichen U-förmige Umbiegungen zur Bildung rinnenförmiger Aufnahmen 28 für die Einzelrohre 6 auf. Die Aufnahmen 28 passen auf diese Weise mit ihrem Außenumfang formschlüssig in die nutförmigen Ausnehmungen 25 der Fertigteilelemente 23 und mit ihrem Innenumfang auf die Einzelrohre 6.

Der Aufbau eines solchen Feststoffspeichers 2 erfolgt durch folgerichtiges Aufeinanderschichten der einzelnen Komponenten, wie es in Fig. 5 in der rechten Explosionsdarstellung gezeigt ist; der fertige Zustand ist in Fig. 5 im linken Teilbereich dargestellt. In diesem Zustand sind die Einzelrohre 6 zwischen dem oberen Wärmeleitelement 26 und unteren Wärmeleitelement 27 eingebettet. Durch das Gewicht der darüber liegenden Schichten 24 des Feststoffspeichers 2 ist sichergestellt, dass einerseits ein Kontakt zwischen den Wärmeleitelementen 26 und 27 und den Fertigteilelementen 23 sowie andererseits zwischen den Wärmeleitelementen 26 und 27 und den Einzelrohren 6 hergestellt ist. So kann die in den Einzelrohren 6 bereitgestellte thermische Energie über die Wärmeleitelemente 26 und 27 tief in die Fertigteilelemente 23 eingeleitet werden, beziehungsweise umgekehrt für den Entladevorgang.

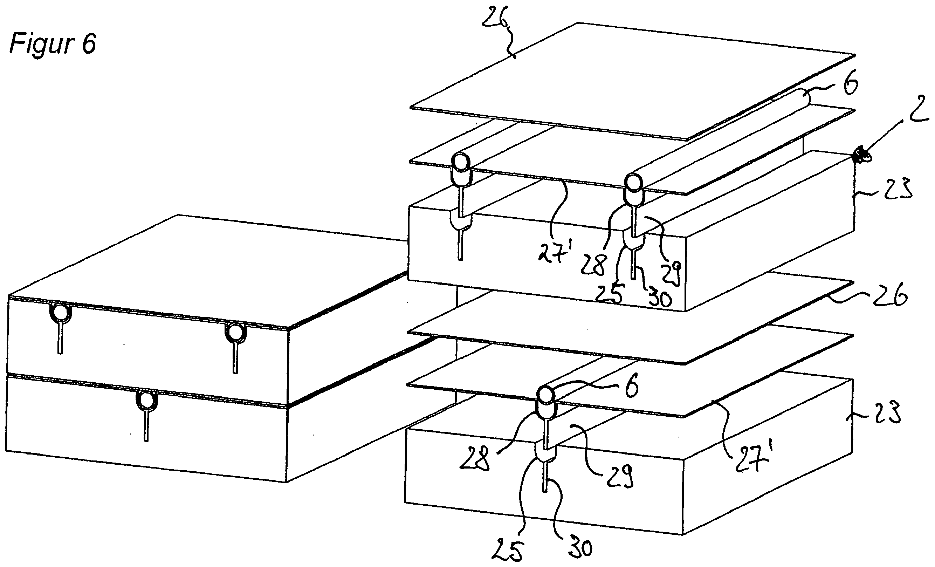

Die in Fig. 6 dargestellte weitere Ausführungsform der Erfindung entspricht weitestgehend der unter Fig. 5 beschriebenen, so dass das dort Gesagte gilt. Im Unterschied ist das untere horizontale Wärmeleitelement 27' um einen vertikalen Wärmeleitsteg 29 ergänzt, der entlang einer äußeren Mantellinie der Aufnahme 28 des Wärmeleitelements 27' angeordnet und fest mit der Aufnahme 28 verbunden ist. Der Wärmeleitsteg 29 erstreckt sich somit rechtwinklig zur Haupterstreckungsebene des horizontalen Wärmeleitelements 27'.

In entsprechender Weise ist das Fertigteilelement 23 geformt, d.h. dieses besitzt einen vertikalen Schlitz 30, der sich vom Grund der nutförmigen Ausnehmung 25 in das Fertigteilelement 23 hinein erstreckt, so weit es aus statischen Gründen möglich ist. Im vorliegenden Fall erstreckt sich der Schlitz 30 bis über die Hälfte der Dicke des Fertigteilelements 23.

Aus Fig. 7a und b wird deutlich, dass die Erfindung zur Aufnahme der Einzelrohre 6 nicht nur Lösungen gemäß der Figuren 5 und 6 vorsieht, wo die die Einzelrohre 6 vollständig aufnehmenden nutförmigen Ausnehmungen 25 in lediglich einem der die Fuge bildenden Fertigteilelemente 23 angeordnet sind (Figur 7b). Wie Figur 7a zeigt liegt eine zur Fugenebene symmetrische Ausbildung der Aufnahmen ebenso im Rahmen der Erfindung, bei der sowohl an der Unterseite eines oberen Fertigteilelements 23 als auch an der Oberseite eines unteren Fertigteilelements 23 nutförmigen Ausnehmungen 25" vorgesehen sind, deren Tiefe etwas mehr als der halbe Durchmesser der Einzelrohre 6 beträgt. Die U-förmigen Aufnahmen 28" der in der Fuge angeordneten horizontalen Wärmeleitelemente 26" und 27" passen dabei formschlüssig in die Längsnuten 25". Wie auch bei den zuvor beschriebenen Ausführungsformen der Erfindung können die Wärmeleitelemente 26" und 27" vorteilhafterweise bereits im Zuge der Herstellung der Fertigteilelemente 23 kraftschlüssig mit dem Fertigteilelement 23 verbunden werden, beispielsweise durch Einlegen in die Schalung vor dem Betonieren.

Der Vorteil dieser Ausführungsform der Erfindung besteht darin, dass die Einzelrohre 6 des Rohrleitungssystems 5 nach ihrem Einlegen in die Aufnahme 28" eines unteren Wärmeleitelements 27" in einem unteren Fertigteilelement 23 mit ihrem halben Umfang einen Überstand in die Stoßfuge bilden. Beim Aufsetzen der Fertigteilelemente 23 der darüber liegenden Schicht 24 findet somit über einen Formschluss eine Zentrierung der beiden übereinander liegenden Fertigteilelemente 23 statt. Eine Zentrierung der Fertigteilelemente kann auch über separate Formschlussmittel in der Stoßfuge, wie zum Beispiel Nut- und Federleisten oder Dorn und Vertiefung, erreicht werden.

Bei den Ausführungsformen der Erfindung gemäß den Figuren 5 bis 7 können die Längsnuten im Querschnitt auch größer ausgebildet sein als die darin verlaufenden Einzelrohre. Der sich dabei einstellende Spalt zwischen Einzelrohr und Wärmeleitelement ermöglicht einen Ausgleich herstellungs- oder montagebedingter Toleranzen. Damit eine effektive Wärmeübertragung zwischen Einzelrohr und Feststoffspeicher dennoch gewährleistet ist, wird der Spalt mit einem thermisch gut leitfähigen Material wie z.B. gemahlenem Naturgraphit oder Metallspänen oder einer geeigneten Flüssigkeit aufgefüllt.

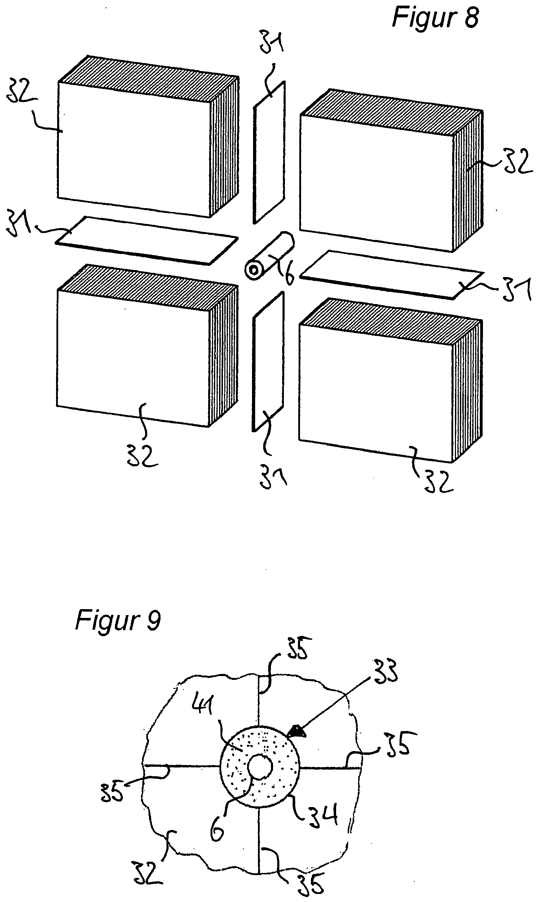

Eine andere nicht beanspruchte Ausführungsform der Erfindung offenbart Fig. 8 in einer explosionsartigen Darstellung. Im Zentrum sieht man ein Einzelrohr 6, von dem ausgehend sich nach links und rechts sowie nach oben und unten Wärmeleitelemente 31 erstrecken. Die Wärmeleitelemente 31 können sowohl Flächenelemente als auch Streifenelemente sein und sind beispielsweise am Außenumfang der Einzelrohre 6 angeschweißt. In den dadurch gebildeten Quadranten entlang der Einzelrohre 6 sind Fertigteilelemente 32 eingefügt, die, um einen vollständigen Kontakt zwischen den Wärmeleitelementen 31 und Fertigteilelementen 32 sicherzustellen, an der den Einzelrohren 6 zugewandten Kante eine Fase aufweisen können. Alternativ zu dem Einsatz von Fertigteilelementen 32 bietet sich hier die Herstellung des Feststoffspeichers 2 auch in Ortbetonbauweise an.

Das in Fig. 9 gezeigte Detail einer weiteren nicht beanspruchten Ausführungsform besitzt ein Wärmeleitelement 33, das sich zusammensetzt aus einem zentrischen Wärmeleitrohr 34, an das radial obere und untere sowie linke und rechte Stege 35 angeschlossen sind. Ein solches Wärmeleitelement 33 wird vorteilhafterweise in Verbindung mit Fertigteilelementen 32 verwendet, wobei es bereits bei deren Herstellung mit einbetoniert wird und somit integraler Bestandteil des Fertigteilelements 32 ist.

Das Wärmeleitrohr 34 umgibt die Einzelrohre 6 des Rohrleitungssystems 5 in koaxialer Weise, wobei der Ringspalt zwischen dem Wärmeleitrohr 34 und Einzelrohr 6 mit einem thermisch leitfähigen Material 41 wie z.B. gemahlenem Naturgraphit oder Metallspänen aufgefüllt ist, um Feststoffspeicher 2 und Rohrleitungssystem 5 voneinander mechanisch zu entkoppeln und gleichzeitig den Wärmeübergang von den Einzelrohren 6 zum Wärmeleitelement 33 zu gewährleisten. Diese Funktion kann gemäß einer Abwandlung dieser Ausführungsform auch von Flüssigkeiten übernommen werden, die in den jeweils stirnseitig abgedichteten Ringspalt gefüllt sind. Solche Ausführungsformen sind in der Lage Maßdifferenzen zwischen Rohrleitungssystem 5 und Feststoffspeicher 2 auszugleichen, was die Montage des Wärmespeichers 1 erheblich erleichtern kann.

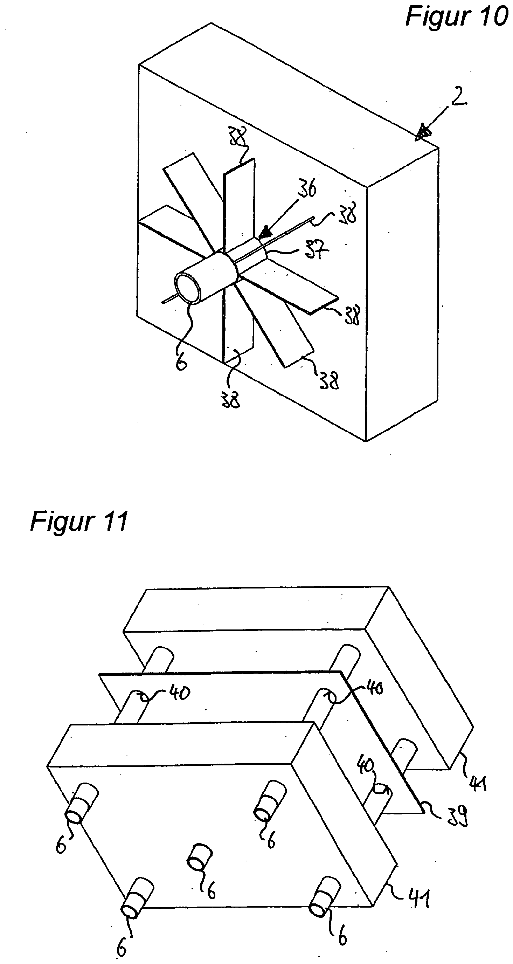

Fig. 10 zeigt eine alternative nicht beanspruchte Ausführungsform, bei der vorgefertigte sternförmige Wärmeleitelemente 36 in axialen Abständen an den Einzelrohren 6 befestigt sind. Die Wärmeleitelemente 36 setzen sich zusammen aus einem zylindrischen Abschnitt 37, an den Radialstege 38 in gleichmäßigem Winkelabstand von 45° anschließen. Der zylindrische Abschnitt 37 weist einen Innendurchmesser auf, der in etwa dem Außendurchmesser der Einzelrohre 6 entspricht, so dass die Wärmeleitelemente 36 auf die Einzelrohre 6 aufgeschoben werden können, bevor der Feststoffspeicher 2 in Ortbetonbauweise vervollständigt wird.

Die Besonderheit der in Fig. 11 dargestellten nicht beanspruchten Ausführungsform besteht in der Verwendung flächiger Wärmeleitelemente 39, die mit Öffnungen 40 ausgerüstet sind, die in Größe und Anordnung dem Raster der Einzelrohre 6 des Rohrleitungssystems 5 entsprechen. Dadurch ist es möglich, die Wärmeleitelemente 39 axial auf die Einzelrohre 6 aufzustecken, was entweder vor dem Betonieren bei Ortbetonfeststoffspeichern geschehen kann, oder durch sandwichartiges Einfügen der Wärmeleitelemente 36 zwischen zwei Fertigteilelemente 41, wie in Fig. 11 dargestellt. Der Wärmeübertragungsbereich zwischen den Einzelrohren 6 und dem Wärmeleitelement 39 wird von den Leibungsflächen der Öffnungen 40 gebildet, die am Außenumfang der Einzelrohre 6 anliegen.

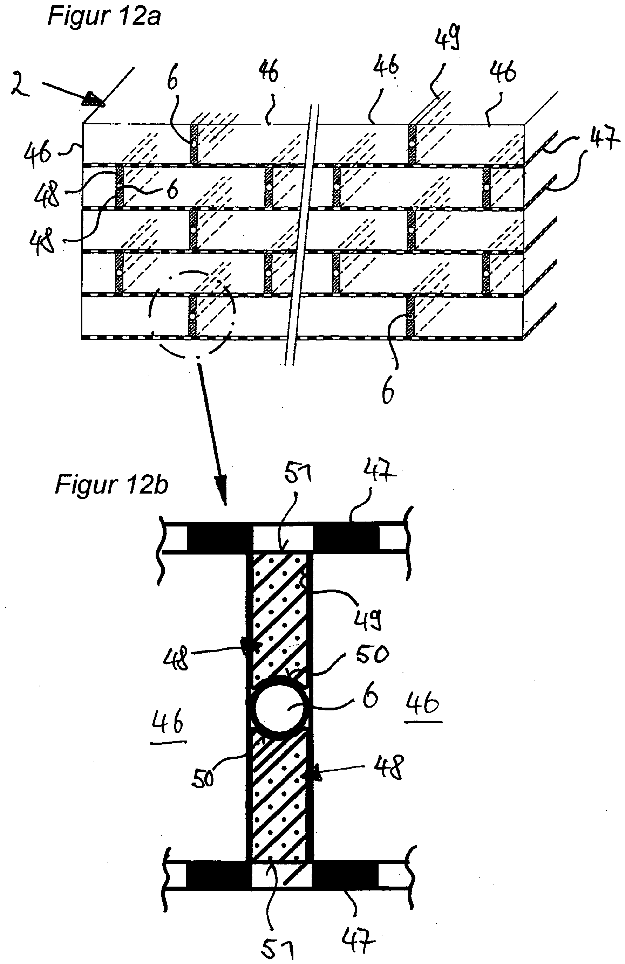

Die Fig. 12a und b zeigen eine weitere nicht beanspruchte Ausführungsform. Man sieht einen Feststoffspeicher 2, der sich aus einer Vielzahl Betonfertigteilelementen 46 zusammensetzt. Die Betonfertigteilelemente 46 sind in horizontalen Lagen übereinander gestapelt, wobei in den Stoßfugen zweier übereinanderliegender Lagen jeweils ein flächiges, horizontal verlaufendes Wärmeleitelement 47 angeordnet ist. Daraus ergibt sich ein Aufbau des Feststoffspeichers 2, bei dem Betonfertigteilelemente 46 und Wärmeleitelemente 47 in vertikaler Richtung abwechselnd angeordnet sind. Das Wärmeleitelement 47 entspricht dabei in Struktur und Materialwahl den unter den Figuren 1 bis 11 beschriebenen und kann beispielsweise aus einem Blech oder einer Folie bestehen.

Die Betonfertigteilelemente 46 einer horizontalen Lage weisen untereinander einen horizontalen seitlichen Abstand zum benachbarten Betonfertigteilelement 46 auf, wodurch sich in horizontaler Richtung fluchtende, sich über die gesamte Höhe der Betonfertigteilelemente 46 erstreckende Längsspalte 49 ergeben. Die Längsspalte 49 dienen zur Aufnahme der Einzelrohre 6 des Rohrleitungssystems 5, die auf halber Höhe eines Längsspalts 49 mittig zwischen den horizontalen Wärmeleitelementen 47 verlaufen. Die Breite der Längsspalte 49 entspricht daher mindestens dem Durchmesser der Einzelrohre 6.

Zur Überleitung der Wärmeenergie von den Einzelrohren 6 auf die horizontalen Wärmeleitelemente 47 und umgekehrt sind in den Längsspalten 49 jeweils streifenförmige, einen vertikalen Wärmetransport ermöglichende Wärmeleitelemente 48 angeordnet, deren eine dem Einzelrohr 6 zugeordnete Längsseite 50 konkav ausgebildet ist, um einen möglichst großen Wärmeübergangsbereich zu schaffen. Die gegenüberliegende Längsseite 51 der vertikalen Wärmeleitelemente 48 ist plan ausgebildet, um einen möglichst großen Kontaktbereich mit den horizontalen Wärmeleitelementen 47 auszubilden. In Querschnitt jeweils zwei solcher Wärmeleitelemente 48 füllen den Längsspalt 49 oberhalb und unterhalb eines Einzelrohrs 6 aus.

Beim Beladen des Feststoffspeichers 2 wird also die in den Einzelrohren 6 herangeführte Wärmeenergie über die vertikalen Wärmeleitelemente 48 linienförmig aufgenommen und im Weiteren in die flächigen horizontalen Wärmeleitelemente 47 eingetragen, wo eine schnelle und großflächige Verteilung der Wärmeenergie im Feststoffspeicher 2 erfolgt. Von den Wärmeleitelementen 47 ausgehend erfolgt dann die Beaufschlagung der Betonfertigteilelemente 46 mit thermischer Energie zu deren Speicherung.

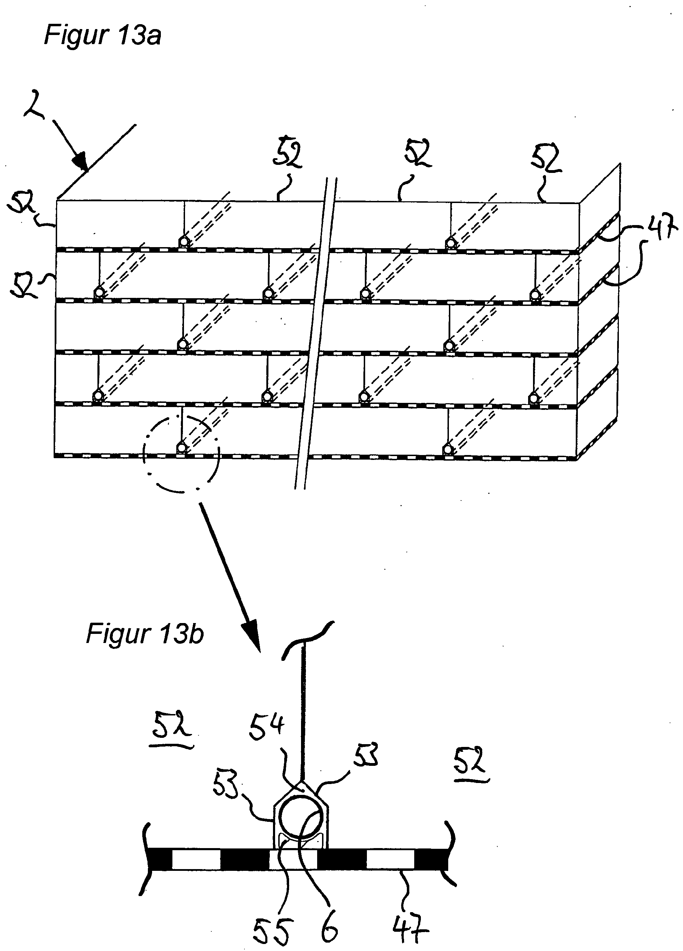

Eine ebenfalls nicht beanspruchte Abwandlung dieser Ausführungsform ist in den Fig. 13a und b dargestellt. Der dort gezeigte Feststoffspeicher 2 entspricht im grundsätzlichen Aufbau mit seiner wechselweisen Anordnung horizontaler Lagen von Betonfertigteilelementen 52 und horizontalen Wärmeleitelementen 47 im Wesentlichen dem in den Fig. 12a und b beschriebenen. Der Feststoffspeicher 2 gemäß der Fig. 13a und b unterscheidet sich jedoch dadurch, dass die Betonfertigteilelemente 52 einer horizontalen Lage unter Kontakt seitlich aneinander liegen, also kein durchgängiger Längsspalt 49 vorhanden ist. Um dennoch die Einzelrohre 6 durch den Feststoffspeicher 2 führen zu können, weisen die sich gegenüberliegenden Längsseiten zweier Betonfertigteilelemente 52 im Bereich ihrer oberen und/oder unteren Längskanten jeweils einen Rücksprung 53 auf. Die sich auf diese Weise gegenüberliegenden Rücksprünge 53 bilden in der Stoßfuge zweier Betonfertigteile 52 einen lediglich zum horizontalen Wärmeleitelement 47 offenen Kanal 54, der zur Aufnahme der Einzelrohre 6 bestimmt ist. Zur Verbesserung der Wärmeleitung zwischen den Einzelrohren 6 und den horizontalen Wärmeleitelementen 47 sind in den Kanal 54 wärmeleitende Formteile 55 eingelegt, die mit ihrer konkaven Seite eine Lagerfläche für die Einzelrohre 6 bilden und mit ihrer gegenüberliegenden planen Seite eine Lagerfläche zum horizontalen Wärmeleitelement 47 hin.

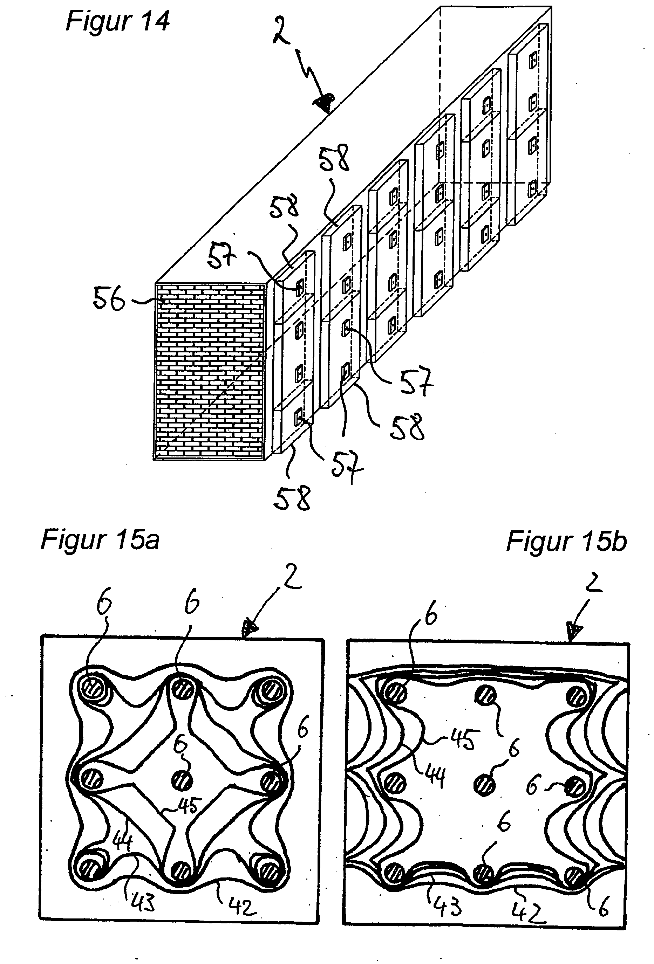

Fig. 14 offenbart einen aus Fertigteilelementen 56 zusammengesetzten Feststoffspeicher 2. Zur Stabilisierung des Feststoffspeichers 2 sind die Fertigteilelemente 56 von horizontal verlaufenden Spannankern 57 zusammengehalten, die sich von der einen vertikalen Längsseite des Feststoffspeichers 2 zur gegenüberliegenden erstrecken. Zur Vergleichmäßigung der Lasteintragung sind zwischen dem Feststoffspeicher 2 und den Ankerköpfen der Spannanker 57 Lastverteilungsplatten 58 angeordnet.

Die effektive Wirkungsweise eines erfindungsgemäßen Wärmespeichers 1 gegenüber konventionellen Wärmespeichern kommt in den Figuren 15a und b deutlich zum Ausdruck. Figur 15a zeigt die Wärmeverteilung über den Querschnitt eines Feststoffspeichers 2 ohne erfindungsgemäße Wärmeleitelemente während des thermischen Beladens. Die Linien 42 bis 45 stellen jeweils Orte gleicher Temperatur dar, auch Isothermen genannt. Der Abstand der Isothermen 42 bis 45 ist ein Maß für das Temperaturgefälle innerhalb des Feststoffspeichers 2. Man sieht einen in etwa quadratischen, von der Isotherme 42 umschlossenen und das zentrale Einzelrohr 6 umgebenden Bereich, der die Zone der höchsten Temperatur innerhalb des Feststoffspeichers 2 beschreibt. Mit zunehmendem Abstand von dem zentralen Einzelrohr 6 sinkt die Temperatur im Feststoffspeicher 2 stetig. Nur unmittelbar an weitere Einzelrohre 6 angrenzende Bereiche weisen lokale, eng begrenzte Zonen höherer Temperatur auf.

Hingegen zeigt der in Fig. 15b dargestellte Temperaturverlauf eines erfindungsgemäßen Feststoffspeichers 2 innerhalb der Isotherme 42 eine ausgedehnte Zone maximaler Temperatur, die sich über beinahe den gesamten, von allen Einzelrohren 6 umschlossenen Teilbereich erstreckt. Ein Temperaturabfall ist im Wesentlichen zwischen den außen liegenden Einzelrohren 6 und der Oberfläche des Feststoffspeichers 2 festzustellen, wo die Isothermen 42 bis 45 verhältnismäßig eng beieinander liegen und somit auf einen großen Temperaturgradienten hinweisen. Dadurch wird deutlich, dass die erfindungsgemäßen Wärmeleitelemente äußerst wirkungsvoll zu einer schnellen und gleichmäßigen Beaufschlagung des Feststoffspeichers mit thermischer Energie beitragen.

In der Zeichnung nicht dargestellt und auch nicht beanspruchtsind Ausführungsformen der Erfindung, bei denen die Wärmeleitelemente aus einem pastösen oder schüttfähigen Material bestehen, beispielsweise aus Metallspänen oder -pulver, das wie die bereits beschriebenen Bleche oder Graphitfolien zwischen zwei Schichten des Feststoffkörpers in einer einheitlichen Dicke aufgetragen wird. Diese Materialien haben den Vorteil, dass mit Aufbringung der Last aus darüber liegenden Schichten eine Verformung und Anpassung der Wärmeleitelemente an die Oberflächenkontur der Schichten erfolgt und so trotz eventueller Toleranzen ein sattes Anliegen der Wärmeleitelemente am Feststoffspeicher und damit ein optimaler Wärmeübergang gewährleistet ist. Damit diese Materialien in Randbereichen nicht aus dem Feststoffspeicher gelangen, kann eine Umhüllung dieser Materialien vorgesehen sein.

Gemäß einer weiteren nicht dargestellten und nicht beanspruchten Ausführungsform der Erfindung ist vorgesehen, die Wärmeleitelemente als Gitterstruktur auszubilden, was in einfacher Art und Weise beispielsweise durch Verwendung eines maschendrahtähnlichen Geflechts erreicht werden kann. Auch hier erfolgt eine selbsttätige Anpassung an eventuelle Unregelmäßigkeiten in der Stoßfuge im Zuge des Aufeinanderlegens zweier Fertigteile. Ferner kann durch Gewichts- und Materialeinsparungen die Handhabbarkeit und Wirtschaftlichkeit weiter gesteigert werden.

## Patentansprüche

1. Vorrichtung zum Zwischenspeichern thermischer Energie mit einem Feststoffspeicher (2) und mit einem von Einzelrohren (6) gebildeten Rohrleitungssystem (5), das den Feststoffspeicher (2) durchzieht und das von einem Energieträgermedium durchströmt ist, und Wärmeleitelementen (20, 21, 26, 27, 29, 31, 33, 36, 39), die mit den Einzelrohren (6) jeweils Wärmeübergangsbereiche ausbilden und die sich in die von den Einzelrohren (6) freien Bereiche des Feststoffspeichers (2) hinein erstrecken, wobei die Wärmeleitelemente (20, 21, 26, 27, 29, 31, 33, 36, 39) eine höhere Wärmeleitfähigkeit besitzen als der Feststoffspeicher (2) und sich ein oberes horizontales Wärmeleitelement (26) und ein unteres horizontales Wärmeleitelement (27) über die gesamte Breite und/oder Länge der Fertigteilelemente (23) oder eine Teilbreite und/oder Teillänge erstrecken, wobei der Feststoffspeicher (2) aus Fertigteilelementen (23) besteht, die in horizontalen Schichten (24) modulartig aufeinander gelegt sind und die Einzelrohre (6) des Rohrleitungssystems (5) in horizontalen Stoßfugen benachbarter Schichten (24) verlaufen, **dadurch gekennzeichnet, dass** zur Aufnahme der Einzelrohre (6) in den Stoßfugen an der Oberseite der Fertigteilelemente (23) nutförmige Ausnehmungen (25) eingeformt sind, die einen ausgerundeten Grund aufweisen und eine Tiefe und Breite besitzen, die etwas größer als der Durchmesser der Einzelrohre (6) ist und die sich über die gesamte Länge des Feststoffspeichers (2) erstrecken, so dass, wenn in Längsrichtung mehrere Fertigteilelemente (23) hintereinander gelegt sind, die nutförmigen Ausnehmungen (25) über die gesamte Länge fluchtend verlaufen, und dass zumindest das untere horizontale Wärmeleitelement (27) U-förmige Umbiegungen zur Bildung rinnenförmiger Aufnahmen (28) für die Einzelrohre (6) aufweist, wobei die Aufnahmen (28) des Wärmeleitelementes (27) mit ihrem Außenumfang formschlüssig in die nutförmigen Ausnehmungen (25) der Fertigteilelemente (23) und mit ihrem Innenumfang auf die Einzelrohre (6) passen, wonach das untere horizontale Wärmeleitelement (27) und das obere horizontale Wärmelement (26) jeweils eine dünnwandige flächenhafte Struktur besitzen und das obere Wärmelement (26) über seine gesamte Fläche plan ausgebildet ist.

2. Vorrichtung nach Anspruch 1, **dadurch gekennzeichnet, dass** das untere horizontale Wärmeleitelement (27, 27') um einen vertikalen Wärmeleitsteg (29) ergänzt ist, der entlang einer äußeren Mantellinie der Aufnahme (28) des Wärmeleitelements (27, 27') angeordnet und fest mit der Aufnahme (28) verbunden ist und dass das Fertigteilelement (23) einen vertikalen Schlitz (30) zur Aufnahme des Wärmeleitstegs (29) des unteren horizontalen Wärmeleitelements (27, 27') besitzt.

3. Vorrichtung nach einem der Ansprüche 1 bis 2, **dadurch gekennzeichnet, dass** der Feststoffkörper (2) aus Ortbeton hergestellt ist.

4. Vorrichtung nach einem der Ansprüche 1 bis 3, **dadurch gekennzeichnet, dass** die Wärmeleitelemente (20, 21, 26, 27, 29, 31, 33, 36, 39) aus Metall bestehen, vorzugsweise aus Aluminium, Magnesium, Mangan, Blei, Eisen, Kupfer, Zink, Silizium oder deren Legierungen, oder aus Graphit bestehen, vorzugsweise expandiertem Graphit.

5. Anlage zum Zwischenspeichern thermischer Energie mit mindestens zwei Wärmespeichern, die in Reihe oder parallel mit dem Energieträgermedium beaufschlagbar sind, **dadurch gekennzeichnet, dass** die mindestens zwei Wärmespeicher (1) nach einem der Ansprüche 1 bis 4 ausgebildet sind.

## Claims

1. A device for the intermediate storage of thermal energy with a solid storage medium (2) and with a pipe system (5) which is formed by individual pipes (6) and runs through the solid storage medium (2) and through which an energy transfer medium flows, and heat conducting elements (20, 21, 26, 27, 29, 31, 33, 36, 39), which with the individual pipes (6) in each case form heat transfer regions and which extend into the regions, free of the individual pipes (6), of the solid storage medium (2), whereby the heat conducting elements (20, 21, 26, 27, 29, 31, 33, 36, 39) have a higher thermal conductivity than the solid storage medium (2) and an upper horizontal heat conducting element (26) and a lower horizontal heat conducting element (27) extend over the entire width and/or length of prefabricated elements (23) or over a partial width and/or partial length, whereby the solid storage medium (2) consists of prefabricated elements (23), which are placed one on top of another in horizontal layers (24) in a modular manner and the individual pipes (6) of pipe system (5) run in horizontal butt joints of adjacent layers (24) **characterized in that** for receiving individual pipes (6) in the butt joint, groove-shaped recesses (25) are formed in the top side of prefabricated elements (23), whereby the groove-shaped recesses (25) have a rounded bottom and a depth and width somewhat larger than the diameter of individual pipes (6) and extend over the entire length of solid storage medium (2), so that if a number of prefabricated elements (23) are placed one behind the other in the longitudinal direction, groove-shaped recesses (25) run aligned over the entire length, and that at least the lower horizontal heat conducting element (27) has U-shaped bent areas to form through-shaped seats (28) for individual pipes (6), whereby the seats (28) of the heat conducting element (27) with their outer circumference fit form-fittingly in groove-shaped recesses (25) of prefabricated elements (23) and with their inner circumference on individual pipes (6), whereupon the lower horizontal heat conducting element (27) and the upper horizontal heat conducting element (26) each have a thin-walled, planar structure and the upper horizontal heat conducting element (26) is formed planar over its entire surface.

2. The device according to claim 1, **characterized in that** the lower horizontal heat conducting element (27, 27') is expanded by a vertical heat conducting bar (29), which is disposed along an outer surface line of seat (28) of heat conducting element (27, 27') and is fixedly connected to seat (28) and the prefabricated element (23) has a vertical slot (30) to accommodate the heat conducting bar (29) of the lower horizontal heat conducting element (27, 27').

3. The device according to any one of claims 1 through 2, **characterized in that** the solid body (2) is made of in-situ concrete.

4. The device according to any one of claims 1 through 3, **characterized in that** the heat conducting elements (20, 21, 26, 27, 29, 31, 33, 36, 39) consist of metal, preferably of aluminum, magnesium, manganese, lead, iron, copper, zinc, silicon, or alloys thereof, or graphite, preferably expanded graphite.

5. A system for the intermediate storage of thermal energy with at least two heat accumulators, which can be supplied in series or parallel with the energy transfer medium, **characterized in that** the at least two heat accumulators (1) are formed according to any one of claims 1 through 4.

## Revendications

1. Dispositif de stockage intermédiaire d'énergie thermique, comprenant un accumulateur à matériau solide (2) et un système de conduites tubulaires (5) formé de tubes individuels (6) qui traverse l'accumulateur à matériau solide (2) et qui est parcouru par un milieu porteur d'énergie, et comprenant des éléments thermoconducteurs (20, 21, 26, 27, 29, 31, 33, 36, 39) qui forment des zones de transfert de chaleur avec les tubes individuels (6) et qui s'étendent dans les zones de l'accumulateur à matériau solide (2) exemptes des tubes individuels (6), les éléments thermoconducteurs (20, 21, 26, 27, 29, 31, 33, 36, 39) possédant une conductivité thermique supérieure à celle de l'accumulateur à matériau solide (2) et un élément thermoconducteur horizontal supérieur (26) et un élément thermoconducteur horizontal inférieur (27) s'étendant sur toute la largeur et/ou la longueur des éléments préfabriqués (23) ou sur une largeur partielle et/ou une longueur partielle, l'accumulateur à matériau solide (2) étant constitué d'éléments préfabriqués (23) qui sont disposés les uns sur les autres de manière modulaire en couches horizontales (24) et les tubes individuels (6) du système de conduites tubulaires (5) s'étendant dans des joints de bout horizontaux de couches (24) adjacentes, **caractérisé, en ce que**, pour recevoir les tubes individuels (6), des évidements (25) en forme de rainure, qui présentent un fond arrondi, et possèdent une profondeur et une largeur qui sont légèrement supérieures au diamètre des tubes individuels (6) et qui s'étendent sur toute la longueur de l'accumulateur à matériau solide (2), sont formés dans les joints de bout sur la face supérieure des éléments préfabriqués (23), de telle sorte que, lorsque plusieurs éléments préfabriqués (23) sont disposés les uns derrière les autres dans la direction longitudinale, les évidements (25) en forme de rainure s'étendent en alignement sur toute la longueur, et qu'au moins l'élément thermoconducteur horizontal inférieur (27) présente des courbures en forme de U pour former des logements (28) en forme de canal pour les tubes individuels (6), les logements (28) de l'élément thermoconducteur (27) s'ajustant par leur périphérie extérieure par complémentarité de forme dans les évidements (25) en forme de rainure des éléments préfabriqués (23) et par leur périphérie intérieure sur les tubes individuels (6), l'élément thermoconducteur horizontal inférieur (27) et l'élément thermoconducteur horizontal supérieur (26) possédant chacun une structure de surface plate à paroi mince et l'élément thermoconducteur supérieur (26) étant plan sur toute sa surface.

2. Dispositif selon la revendication 1, **caractérisé en ce que** l'élément thermoconducteur horizontal inférieur (27, 27') est complété par une lame thermoconductrice verticale (29) qui est disposée le long d'une génératrice extérieure du logement (28) de l'élément thermoconducteur (27, 27') et est reliée solidement au logement (28), et que l'élément préfabriqué (23) possède une fente verticale (30) pour recevoir la lame thermoconductrice (29) de l'élément thermoconducteur horizontal inférieur (27, 27').

3. Dispositif selon l'une des revendications 1 à 2, **caractérisé en ce que** le corps en matériau solide (2) est fabriqué en béton coulé sur place.

4. Dispositif selon l'une des revendications 1 à 3, **caractérisé en ce que** les éléments thermoconducteurs (20, 21, 26, 27, 29, 31, 33, 36, 39) sont constitués de métal, de préférence d'aluminium, de magnésium, de manganèse, de plomb, de fer, de cuivre, de zinc, de silicium ou de leurs alliages, ou de graphite, de préférence de graphite expansé.

5. Installation de stockage intermédiaire d'énergie thermique comportant au moins deux accumulateurs de chaleur pouvant être alimentés en milieu porteur d'énergie en série ou en parallèle, **caractérisée en ce que** lesdits au moins deux accumulateurs de chaleur (1) sont conçus selon l'une des revendications 1 à 4.
